# EUROPÄISCHE PATENTANMELDUNG

(11) **EP 2 927 535 A1**
(43) Veröffentlichungstag der Anmeldung: **07.10.2015**
(21) Anmeldenummer: 14163640.7
(22) Anmeldetag: 04.04.2014
(51) Int. Cl.: F16H 25/20, F16K 31/04, H02K 7/06

(54) **Stelleinrichtung**

(71) Anmelder: FESTO AG & Co. KG, 73734 Esslingen (DE)
(72) Erfinder: Stoll, Kurt, 73732 Esslingen am Neckar, Hohenkreuz (DE); Riek, Alfons, 73235 Weilheim (DE); Sigrist, Martin, 3005 Bern (CH); Mock, Elmar, 2013 Colombier (CH); Malzach, Samuel, 2503 Biel (CH)
(74) Vertreter: Frei Patent Attorneys

(57) **Zusammenfassung**

Stelleinrichtung (1) zur Erzeugung einer rotationalen Stellbewegung aus einer rotationalen Antriebsbewegung, insbesondere zum rotationalen Verstellen eines Ventils, umfassend eine Antriebswelle (2), einen Zwischenkörper (3), einen Referenzkörper (4), und einen Abtriebskörper (5). Die vorgenannten Elemente sind relativ zueinander bewegbar ausgebildet. Die Stelleinrichtung (1) umfasst ein erstes Getriebe und ein davon verschiedenes zweites Getriebe. Das erste Getriebe setzt eine rotationale Bewegung der Antriebswelle (2) relativ zum Referenzkörper (4) in eine lineare Bewegungskomponente des Zwischenkörpers (3) relativ zum Referenzkörper (4) um. Die Stelleinrichtung (1) weist auch eine Verschiebungsgerade auf, entlang welcher sich der Zwischenkörper (3) durch die lineare Bewegungskomponente des Zwischenkörpers (3) relativ zum Referenzkörpers (4) bewegt. Das zweite Getriebe setzt die lineare Bewegungskomponente des Zwischenkörpers (3) relativ zum Referenzkörper (4) in eine rotationale Bewegung des Abtriebkörpers relativ zum Referenzkörper (4) um. Das zweite Getriebe kann ein Getriebe eines ersten Typs und/oder eines zweiten Typs umfassen, welches die lineare Bewegungskomponente des Zwischenkörpers (3) in eine rotationale Bewegung des Zwischenkörpers (3) relativ zum Referenzkörper (4) bzw. zum Abtriebskörper (5) umsetzt.

## Beschreibung

Die Erfindung bezieht sich auf das Gebiet von Stelleinrichtungen zur Erzeugung einer rotationalen Stellbewegung aus einer rotationalen Antriebsbewegung. Insbesondere bezieht sich die Erfindung auf das Gebiet von Stelleinrichtungen zum rotationalen Verstellen eines Ventils. Sie bezieht sich auf eine Stelleinrichtung gemäss dem Oberbegriff des Patentanspruches 1. Ein weiterer Aspekt der Erfindung bezieht sich auf das Gebiet von Vorrichtungen, welche einen fail safe Mechanismus und eine Stelleinrichtung umfassen.

Eine rotationale Stellbewegung ist typischerweise eine Bewegung von wenigen Umdrehungen oder von einem Bruchteil einer Umdrehung. Eine rotationale Stellbewegung umfasst also sowohl eine schwenkende Bewegung (beispielsweise um 90 Grad oder um 60 Grad) als auch eine drehende Bewegung.

Im derzeitigen Stand der Technik wird eine Stelleinrichtung für rotationale Bewegungen durch eine rotationale Antriebsbewegung typischerweise dadurch angetrieben, dass die rotationale Antriebsbewegung über Zahnradgetriebe, Ketten und/oder Riemen auf einen Abtrieb übertragen wird, wodurch der Abtrieb ebenfalls eine rotationale Bewegung ausführt. Dabei ist typischerweise eine Übersetzung zwischen der rotationalen Antriebsbewegung und der rotationalen Bewegung des Abtriebs ausgebildet. Diese Übersetzung erlaubt es, eine relativ kleine Stellbewegung durch eine vergleichsweise grosse Antriebsbewegung zu erreichen. Auf diese Weise kann bei bekannten Stelleinrichtungen vermieden werden, dass kostspielige, drehmomentstarke und grosse Antriebe zum Antreiben der Stelleinrichtung verwendet werden müssen.

Bekannte Stelleinrichtungen sind aber aufgrund der bisherigen Bauweise, welche eine Kopplung der rotationalen Antriebsbewegung mit der rotationalen Bewegung des Abtriebs durch Zahnradgetriebe, Ketten und/oder Riemen realisiert, kompliziert konstruiert und fallen räumlich gross aus. Zudem können bekannte Stelleinrichtungen viele Einzelteile und/oder kleine präzis gefertigte Teile aufweisen und sind teuer in Herstellung, Montage, Wartung und Reparatur. Weiters können die bekannten Stelleinrichtungen relativ störanfällig sein, können stark verschleissen und/oder können schwierig zu montieren, zu warten bzw. zu reparieren sein.

Es ist deshalb Aufgabe der Erfindung, eine Stelleinrichtung der eingangs genannten Art zu schaffen, welche mindestens einen der oben genannten Nachteile mindestens teilweise behebt.

Diese Aufgabe löst eine Stelleinrichtung mit den Merkmalen des Patentanspruches 1.

Die erfindungsgemässe Stelleinrichtung zur Erzeugung einer rotationalen Stellbewegung aus einer rotationalen Antriebsbewegung, insbesondere zum rotationalen Verstellen eines Ventils, umfasst eine Antriebswelle, einen Zwischenkörper, einen Referenzkörper, und einen Abtriebskörper. Dabei sind die vorgenannten Elemente der Stelleinrichtung relativ zueinander bewegbar ausgebildet. Zudem umfasst die Stelleinrichtung ein erstes Getriebe und ein zweites vom ersten verschiedenes Getriebe. Dabei
- ist das erste Getriebe derart ausgebildet, dass es eine rotationale Bewegung der Antriebswelle relativ zum Referenzkörper in eine lineare Bewegungskomponente des Zwischenkörpers relativ zum Referenzkörper umsetzt,
- weist die Stelleinrichtung eine Verschiebungsgerade auf, entlang welcher sich der Zwischenkörper durch die lineare Bewegungskomponente des Zwischenkörpers relativ zum Referenzkörper bewegt und
- ist das zweite Getriebe derart ausgebildet, dass es die lineare Bewegungskomponente des Zwischenkörpers relativ zum Referenzkörper in eine rotationale Bewegung des Abtriebkörpers relativ zum Referenzkörper umsetzt.

Die Antriebswelle kann eine rotationale Antriebsbewegung eines Antriebs aufnehmen und dadurch die rotationale Bewegung relativ zum Referenzkörper aufweisen. Der Referenzkörper kann beispielsweise ein Gehäuse, ein Gestell oder ein Rahmen sein. Der Referenzkörper bleibt insbesondere während einer Stellbewegung räumlich an derselben Stelle. Beispielsweise ist der Referenzkörper im Fall einer Stelleinrichtung für Ventile starr bezüglich des Ventilgehäuses bzw. starr bezüglich zum Ventil führenden Leitungen angeordnet.

Das erste Getriebe setzt die rotationale Bewegung der Antriebswelle (relativ zum Referenzkörper) in eine lineare Bewegungskomponente des Zwischenkörpers (relativ zum Referenzkörper) um. Der Zwischenkörper bewegt sich also aufgrund der rotationalen Bewegung der Antriebswelle und der Kopplung damit durch das erste Getriebe mit einer linearen Bewegungskomponente relativ zum Referenzkörper. Diese Bewegung des Zwischenkörpers aufgrund seiner linearen Bewegungskomponente erfolgt entlang der Verschiebungsgerade. Der ganze Referenzkörper wird also durch die lineare Bewegungskomponente entlang der Verschiebungsgeraden bewegt.

Das zweite Getriebe setzt die lineare Bewegungskomponente des Zwischenkörpers (relativ zum Referenzkörper) in eine rotationale Bewegung des Abtriebkörpers (relativ zum Referenzkörper) um. Der Abtriebskörper rotiert also aufgrund der linearen Bewegungskomponente des Zwischenkörpers und seiner Kopplung an den Zwischenkörper durch das zweite Getriebe. Sowohl das erste als auch das zweite Getriebe übertragen dabei eine Bewegung bzw. Kraft der Antriebswelle auf den Abtriebskörper.

Die beschriebene Stelleinrichtung wandelt also durch das erste Getriebe die rotationale Bewegung der Antriebswelle in die lineare Bewegungskomponente des Zwischenkörpers um und diese wiederum durch das zweite Getriebe in die rotationale Bewegung des Abtriebkörpers. Diese lineare Bewegungskomponente kann auch als Hub bezeichnet werden.

Insbesondere kann der Zwischenkörper relativ zum Referenzkörper nicht nur eine lineare Bewegungskomponente aufweisen, sondern zusätzlich auch noch eine rotationale Bewegungskomponente. Anders ausgedrückt kann der Zwischenkörper relativ zum Referenzkörper auch eine kombiniere Dreh-Hubbewegung ausführen.

Eine aus der Hubbewegung oder aus der Dreh-Hubbewegung resultierte Verdrängung von Fluid (insbesondere von Luft im Referenzkörper) kann optional genutzt werden, beispielsweise für pneumatische Wechselwirkungen oder als Kühlung für einen Antrieb. Durch pneumatische Wechselwirkungen können beispielsweise Schalter angesprochen und/oder aktiviert werden und/oder Ventile und insbesondere Einwegventile verstellt werden.

Die oben beschriebene Stelleinrichtung eröffnet aufgrund der Umsetzung der rotationalen Bewegung in eine lineare Bewegungskomponente (und wieder zurück in eine rotationale Bewegung) neue und vorteilhafte Möglichkeiten einer räumlichen Anordnung von bewegten Teilen. Diese neuen räumlichen Anordnungen von bewegten Teilen erlauben bei gleicher oder besserer Stabilität der Stelleinrichtung kompakte Aussenmasse. Eine solche Stelleinrichtung kann aus wenigen Einzelteilen ausgebildet werden. Die Stelleinrichtung kann aus einfach konstruierten Einzelteilen ausgebildet werden. Die Einzelteile der Stelleinrichtung können mit einer relativ grossen Fertigungstoleranz hergestellt werden. Aus vorgenannten Gründen ist die beschriebene Stelleinrichtung kostengünstig herstellbar und einfach zu Montieren, zu Reparieren und zu Warten. Eine Übersetzung von der Antriebswelle auf den Abtriebskörper kann durch diese Stelleinrichtung einfach und raumsparend ausgebildet werden.

Als optionales Merkmal kann das zweite Getriebe ein Getriebe eines ersten Typs umfassen. Das Getriebe ersten Typs setzt die lineare Bewegungskomponente des Zwischenkörpers relativ zum Referenzkörper in eine rotationale Bewegung des Zwischenkörpers relativ zum Referenzkörper um.

Mit anderen Worten koppelt das Getriebe ersten Typs (welches vom zweiten Getriebe umfasst wird) den Zwischenkörper derart an den Referenzkörper, dass die lineare Bewegungskomponente des Zwischenkörpers (relativ zum Referenzkörper) den Zwischenkörper in eine rotationale Bewegung (relativ zum Referenzkörper) versetzt.

Durch dieses Getriebe ersten Typs ist also der Zwischenkörper mit dem Referenzkörper gekoppelt. Die rotationale Bewegung des Zwischenkörpers, welche aus der linearen Bewegungskomponente des Zwischenkörpers resultiert, kann insbesondere zur rotationalen Bewegung des Abtriebkörpers relativ zum Referenzkörper beitragen.

Als weiteres optionales Merkmal kann das zweite Getriebe ein Getriebe zweiten Typs umfassen. Das Getriebe zweiten Typs setzt eine lineare Bewegungskomponente des Zwischenkörpers relativ zum Abtriebskörper in eine rotationale Bewegung des Zwischenkörpers relativ zum Abtriebskörper um.

Mit anderen Worten koppelt das Getriebe zweiten Typs (welches vom zweiten Getriebe umfasst wird) den Zwischenkörper derart an den Abtriebskörper, dass die lineare Bewegungskomponente des Zwischenkörpers (relativ zum Abtriebskörper) den Zwischenkörper in eine rotationale Bewegung (relativ zum Abtriebskörper) versetzt.

Durch dieses Getriebe zweiten Typs ist also der Zwischenkörper mit dem Abtriebskörper gekoppelt. Die rotationale Bewegung des Zwischenkörpers, welche aus der linearen Bewegungskomponente des Zwischenkörpers resultiert, kann insbesondere zur rotationalen Bewegung des Abtriebkörpers relativ zum Referenzkörper beitragen.

Insbesondere kann das zweite Getriebe sowohl ein Getriebe ersten Typs als auch ein Getriebe zweiten Typs umfassen. Dadurch kann eine Übertragung der Bewegung und der Kraft durch das zweite Getriebe auf mindestens zwei Teilgetriebe (nämlich ein Getriebe ersten Typs und ein Getriebe zweiten Typs) aufgeteilt werden. Dass das zweite Getriebe sowohl ein Getriebe ersten Typs als auch ein Getriebe zweiten Typs umfasst, ist vorteilhaft für Verschleiss, Dimensionierung, Laufruhe, Montagefreundlichkeit, Reparaturfieundlichkeit und/oder Wartungsfreundlichkeit der Stelleinrichtung.

Zusätzlich oder alternativ kann eine Antriebsachse parallel zu einer Abtriebsachse angeordnet sein. Insbesondere kann die Antriebsachse koaxial zur Abtriebsachse angeordnet sein. Dabei rotiert die Antriebswelle bei der rotationalen Bewegung um die Antriebsachse, und der Abtriebskörper rotiert bei der rotationalen Bewegung um die Abtriebsachse.

Eine parallele Anordnung der Antriebsachse und der Abtriebsachse erlaubt eine kompakte Anordnung von Antriebswelle und Abtriebskörper. Auch eine koaxiale Anordnung erlaubt eine kompakte Anordnung. Zudem erlaubt eine koaxiale Anordnung eine selbstzentrierende Konstruktion einer die Antriebswelle und den Abtriebskörper umfassenden funktionalen Einheit.

Als anderes optionales Merkmal kann die Verschiebungsgerade parallel zur Abtriebsachse angeordnet sein.

Anders ausgedrückt bewegt die lineare Bewegungskomponente den Zwischenkörper dann parallel zur Abtriebsachse. Dies erlaubt eine vorteilhafte Anordnung der bewegten Teile der Stelleinrichtung und dadurch eine kompakte Ausbildung der Stelleinrichtung.

Zusätzlich oder alternativ kann das erste und/oder das zweite Getriebe ein Schraubgetriebe umfassen, welches zum Umsetzen der rotationalen Bewegungen bzw. der linearen Bewegungskomponente angeordnet ist.

Ein Schraubgetriebe umfasst ein erstes Bauteil mit einer helikoidalen Führung, welche wendelartig ausgebildet ist und auch als schraubenartig oder als Gewinde bezeichnet werden kann. Zudem umfasst das Schraubgetriebe ein zweites Bauteil mit einem Gegenelement zur helikoidalen Führung des ersten Bauteils, wodurch das zweite Bauteil entlang der helikoidalen Führung des ersten Bauteils geführt relativ zu diesem bewegbar ist. Bei Verdrehen des ersten Bauteils relativ zum zweiten Bauteil (oder auch umgekehrt) werden die beiden Bauteile durch das Schraubgetriebe mit einer linearen Bewegungskomponente entlang einer Mittelachse der helikoidalen Führung gegeneinander bewegt. Alternativ dazu oder zusätzlich dazu gilt für das Schraubgetriebe: beim Bewegen des ersten Bauteils relativ zum zweiten Bauteil (oder auch umgekehrt) mit einer linearen Bewegungskomponente entlang einer Mittelachse der helikoidalen Führung werden die beiden Bauteile durch das Schraubgetriebe relativ zueinander verdreht.

Abhängig von einer Gewindesteigung des Schraubgetriebes kann sich aus mechanischen Gründen eine Funktionsselektion ergeben: das Schraubgetriebe kann beispielsweise nur die lineare Bewegungskomponente in die rotationale Bewegung umsetzen, nicht aber die rotationale Bewegung in die lineare Komponente. Oder aber das Schraubgetriebe kann etwa die rotationale Bewegung in die lineare Komponente umsetzen, nicht aber die lineare Bewegungskomponente in die rotationale Bewegung.

Es ist auch möglich, dass keine Funktionsselektion vorhanden ist. Dies bedeutet, dass sowohl die lineare Bewegungskomponente in die rotationale Bewegung umgesetzt, aber auch die rotationale Bewegung in die lineare Komponente umgesetzt werden kann.

Diese Funktionsselektion des Schraubgetriebes abhängig von der Gewindesteigung kann beispielsweise vorteilhaft beim zweiten Getriebe eingesetzt werden. Auf diese Weise kann etwa der Abtriebskörper zwar durch eine Bewegung der Antriebswelle bewegt werden, wobei aber gleichzeitig verhindert wird, dass - in umgekehrter Funktionsrichtung - eine Bewegung des Abtriebskörpers die Antriebswelle bewegt.

Insbesondere kann das zweite Getriebe in der oben beschriebenen Stelleinrichtung räumlich gross dimensioniert werden. Dies kann genutzt werden, um grosse Berührungsflächen des Schraubgetriebes auszubilden. Grosse Berührungsflächen bei Schraubgetrieben reduzieren einen Druck einer Flächenpressung, was bei gleicher Stabilität eine Verwendung von weicherem Material als bei Flächenpressung mit höherem Druck erlaubt. Dies kann bei einer Materialwahl von Vorteil sein, weil sich dadurch beispielsweise eine grössere Auswahl an geeignetem Material finden lässt. Insbesondere kann sich dies in günstigeren Herstellungskosten niederschlagen.

Eine helikoidale Führung und/oder ein Gegenelement der helikoidalen Führung können sich in axialer Richtung über eine vollständige Windung (also einer Drehung um 360 Grad) erstrecken, über mehrere Windungen erstrecken oder aber auch nur über Bruchteile einer Windung erstrecken. Insbesondere können sich eine helikoidale Führung und/oder ein Gegenelement der helikoidalen Führung über eine halbe Windung (180 Grad), über einen Drittel einer Windung (120 Grad), über eine Viertelwindung (90 Grad), über einen Sechstel einer Windung (60 Grad), über einen Achtel einer Windung (45 Grad) oder über einen Zwölftel einer Windung (30 Grad) erstrecken.

Ein Schraubgetriebe kann einfach und kostengünstig hergestellt werden. Ein Schraubgetriebe ist robust und kann verschleissarm ausgebildet werden. Ein Schraubgetriebe kann mit wenigen Einzelteilen ausgebildet werden.

Optional kann die Antriebswelle translationsfest aber drehbar am Referenzkörper gelagert sein. Insbesondere kann auch der Abtriebskörper translationsfest aber drehbar am Referenzkörper gelagert sein.

Mit translationsfester Lagerung zweier Körper ist gemeint, dass keine gegenseitige Translation der beiden Körper möglich ist bzw. keine lineare Bewegung der beiden Körper relativ zueinander möglich ist. Drehbar zueinander gelagerte Körper können relativ zueinander rotationale Bewegungen ausführen.

Als weiteres optionales Merkmal umfasst die Stelleinrichtung einen elektrischen Antrieb. Der Antrieb ist dabei zum Antreiben der Antriebswelle angeordnet.

Durch einen von der Stelleinrichtung umfassten elektrischen Antrieb kann die Stelleinrichtung einfach und kompakt ausgebildet sein. Eine Stelleinrichtung kann zuverlässig und als antriebstechnisch eigenständige Einheit betrieben werden. Stelleinrichtungen mit elektrischem Antrieb können einfach gesteuert und/oder geregelt werden. Auch eine Überwachung der Stelleinrichtung mit elektrischem Antrieb ist über eine Auswertung der elektrischen Speisung des Antriebs möglich und relativ einfach. Elektrische Antriebe können kompakt und kostengünstig sein und sind leicht verfügbar. Insbesondere können Schrittmotoren verwendet werden. Insbesondere kann eine Steuerung des Antriebs in die Stelleinrichtung integriert werden. Alternativ kann die Steuerung des Antriebs ausserhalb der Stelleinrichtung angeordnet sein.

Insbesondere kann der Antrieb derart ausgebildet sein, dass ein Rotor des Antriebs die Antriebswelle umfasst. Insbesondere kann der Antrieb derart ausgebildet sein, dass ein Stator des Antriebs den Abtriebskörper umfasst. Insbesondere kann der Antrieb derart ausgebildet sein, dass der Stator des Antriebs den Abtriebsköiper umfasst und der Rotor des Antriebs die Antriebswelle umfasst.

Die Stelleinrichtung kann beispielsweise auch Sensoren aufweisen, welche eine Position, eine Bewegung oder einen Zustand der Stelleinrichtung oder deren Komponenten erfassen. Insbesondere kann z.B. der Antrieb einen Encoder aufweisen, oder es können Endschalter für die lineare Bewegungskomponente des Zwischenkörpers, für eine Rotation eines Rotors des Antriebs, für eine Rotation der Antriebswelle und/oder für eine Rotation des Abtriebkörpers vorgesehen sein.

Die Stelleinrichtung kann alternativ oder zusätzlich aber auch mechanisch angetrieben werden (beispielsweise durch Federkraft oder eine Handkurbel). Die Stelleinrichtung kann alternativ oder zusätzlich auch pneumatisch und/oder hydraulisch betrieben werden. Die Stelleinrichtung kann alternativ oder zusätzlich auch chemisch angetrieben werden, beispielsweise durch Spreng- bzw. Treibsätze.

Optional ist ein Antrieb der Antriebswelle rotationsfest und translationsfest am Abtriebskörper befestigt ist.

Insbesondere kann ein elektrischer Antrieb rotationsfest und translationsfest am Abtriebskörper befestigt sein.

Mit rotationsfest und translationsfest am Abtriebskörper befestigtem Antrieb ist gemeint, dass ein Stator des Antriebs rotationsfest und translationsfest am Abtriebskörper befestigt ist. Dabei ist beispielsweise ein Rotor des Antriebs an der Antriebswelle befestigt.

Ein rotationsfest und translationsfest am Abtriebskörper befestigter Antrieb erlaubt eine kompakte Ausbildung der Stelleinrichtung. Eine solche Stelleinrichtung kann selbstzentrierend konstruiert werden, was den Aufbau der Stelleinrichtung vereinfacht.

Als weiteres mögliches und optionales Merkmal ist in einer ersten Stellung der Stelleinrichtung ein Antrieb der Antriebswelle im Wesentlichen vom Zwischenkörper räumlich umgeben, und der Antrieb befindet sich in einer zweiten, von der ersten verschiedenen, Stellung der Stelleinrichtung im Wesentlichen ausserhalb des Zwischenkörpers.

Mit dem Ausdruck "im Wesentlichen" ist ein Anteil von 90% gemeint, insbesondere ein Anteil von 75% und insbesondere ein Anteil von 60%.

Anders ausgedrückt bewegt die lineare Bewegungskomponente des Zwischenkörpers (relativ zum Referenzkörper) den Antrieb mindestens teilweise in den Zwischenkörper hinein und wieder hinaus. Oder mit anderen Worten befindet sich der Antrieb mindestens bereichsweise innerhalb des Zwischenkörpers oder ausserhalb des Zwischenkörpers, je nach Stellung der Stelleinrichtung. Der Zwischenkörper bewegt sich somit aufgrund der linearen Bewegungskomponente von einer den Antrieb teilweise umhüllenden Position derart vom Antrieb weg, dass ein kleinerer Anteil des Antriebs vom Zwischenkörper umhüllt ist (und umgekehrt).

Auf diese Weise kann die Stelleinrichtung kompakt ausgebildet sein und gleichzeitig eine relativ lange Verschiebungsgerade aufweisen, weil der Antrieb mindestens teilweise und mindestens zeitweise im Zwischenkörper angeordnet sein kann.

Der Antrieb kann alternativ aber auch ausserhalb des Zwischenkörpers angeordnet sein. Oder der Antrieb kann etwa auch ausserhalb der Stelleinrichtung angeordnet sein.

Zusätzlich oder alternativ kann der Zwischenkörper mindestens bereichsweise als Hohlzylinder ausgebildet sein, wobei der Hohlzylinder koaxial zur Abtriebsachse angeordnet ist.

Für dieses optionale Merkmal gelten dieselben Vorteile und Alternativen wie in den Absätzen direkt darüber beschrieben. Als weiteren Vorteil erlaubt ein Zwischenkörper, dessen Form mindestens bereichsweise als Hohlzylinder ausgebildet ist, eine einfache und kosteneffiziente Ausbildung des zweiten Getriebes in Form von Schraubgetrieben an einer Innenseite und/oder Aussenseite des Hohlzylinders. Insbesondere können elektrische Antriebe, welche mindestens bereichsweise zylindrisch ausgebildet sind, platzsparend und raumoptimiert mindestens bereichsweise und mindestens zeitweise vom derart ausgebildeten Zwischenkörper umhüllt werden.

Rotationssymmetrische Teile der Stelleinrichtung und insbesondere auch der Zwischenkörper können einfach und kostengünstig hergestellt werden. Dies kann beispielsweise durch Giessen (insbesondere durch Spritzgiessen), Drehen und/oder Fräsen erfolgen. Auch können rotationssymmetrische Teile der Stelleinrichtung beispielsweise aus zwei spiegelsymmetrischen Halbteilen gebildet werden. Solche Halbteile können wiederum einfach und kostengünstig hergestellt werden. Zudem sind Montage, Wartung und Reparatur der Stelleinrichtung einfach, rasch und kostengünstig, wenn ein oder mehrere Teile der Stelleinrichtung zwei Halbteile umfassen, welche um bereits montierte andere Komponenten herum zusammengesetzt bzw. auseinander genommen werden können. Diese Vorteile von Halbteilen lassen sich auch mit anderen symmetrischen Aufteilungen erreichen, welche gleich ausgeformte Teile umfassen, beispielsweise Drittel, Viertel, Fünftel, Sechstel oder andere Aufteilungen.

Insbesondere kann die Antriebswelle ein Gewinde in Form eines zweigängigen Doppelgewindes aufweisen, was ein Ausbilden eines Gegengewindes aus zwei gleichen Teilen erlaubt. Dies wiederum ermöglicht einen einfachen Zusammenbau und gleichzeitig auch eine einfache und rasche sowie dadurch kostengünstige Montage, Wartung und Reparatur.

Als optionales Merkmal umfasst das erste Getriebe und/oder das zweite Getriebe ein Schraubgetriebe in Form eines Gleitlagers, bei welchem sowohl eine helikoidalen Führung als auch ein Gegenelement der helikoidalen Führung aus Kunststoff ausgebildet sind und diese durch Gleitreibung aneinander relativ zueinander bewegbar sind.

Insbesondere kann ein Getriebe ersten Typs als Gleitlager ausgebildet sein. Insbesondere kann ein Getriebe zweiten Typs als Gleitlager ausgebildet sein.

Bei Gleitlagern stehen gegeneinander bewegte Teile in direktem Kontakt, hier also die helikoidale Führung und das Gegenelement der helikoidalen Führung. Im direkten Kontakt bewegen diese sich unter Gleitreibung relativ zueinander.

Gleitlager mit aneinander reibenden Flächen aus Kunststoff sind einfach, kostengünstig und rasch herstellbar. Die aneinander reibenden Flächen des Gleitlagers können insbesondere verschiedene Kunststoffe umfassen. Dies gilt für Bereiche der aneinander reibenden Flächen und/oder für eine der reibenden Flächen im Vergleich zu der anderen damit reibenden Fläche. Bestimmte und gezielt einsetzbare Kunststoffpaarungen können je nach Anforderung an die Stelleinrichtung gewünschte Gleitreibungskoeffizienten aufweisen. Insbesondere kann das Gleitlager als Ausformung von aus Kunststoff bestehenden Einzelteilen der Stelleinrichtung ausgebildet werden, was entsprechend kostengünstig und effizient ist.

Die aneinander reibenden Flächen des Gleitlagers können insbesondere aus verschiedenem Material sein. Auch dies gilt für Bereiche der aneinander reibenden Flächen und/oder für eine der reibenden Flächen im Vergleich zu der anderen damit reibenden Fläche.

Alternativ können Teile des Gleitlagers oder Einzelteile, welche Teile des Gleitlagers aufweisen, auch aus Keramik gefertigt sein. Oder die Gleitlager weisen aneinander reibende Flächen aus Kunststoff auf, welche nur als Beschichtungen aus Kunststoff auf anderem Material ausgebildet sind. Auch eine Beschichtung von aneinander reibenden Flächen aus Kunststoff zur Bildung des Gleitlagers ist denkbar.

Optional kann das erste Getriebe und/oder zweite Getriebe ein Getriebe umfassen, welches als Wälzlager ausgebildet ist und welches dem Umsetzen der linearen Bewegungskomponente in die rotationale Bewegung dient.

Relativ zueinander bewegte Teile stützen sich beim Wälzlager über Wälzkörper aufeinander. Ein gegenseitiges Bewegen der Teile kann durch Rollreibung zwischen den bewegten Teilen und den Wälzkörpern erfolgen. Ein gegenseitiges Bewegen der Teile kann auch mindestens teilweise durch Gleitreibung zwischen den bewegten Teilen und den Wälzkörpern erfolgen. Insbesondere kann ein gegenseitiges Bewegen der Teile durch eine Mischung aus Rollreibung und Gleitreibung zwischen den bewegten Teilen und den Wälzkörpern erfolgen Diese Wälzkörper können beispielsweise Kugeln oder Walzen sein.
Insbesondere kann ein Getriebe ersten Typs als Wälzlager ausgebildet sein. Insbesondere kann ein Getriebe zweiten Typs als Wälzlager ausgebildet sein.

Insbesondere kann das zweite Getriebe ein Schraubgetriebe umfassen, welches als Wälzlager ausgebildet ist. Dies bedeutet, dass die helikoidale Führung und das Gegenelement der helikoidalen Führung ein Wälzlager ausbilden. Anders gesagt entspricht dies einem durch Wälzlager geführten Schraubgetriebe. Dabei ersetzt Rollreibung die Gleitreibung des Gleitlagers.

Als weiteres optionales Merkmal weist die Antriebswelle einerseits einen Antrieb auf (welcher somit von der Stelleinrichtung umfasst ist), und die Antriebswelle weist andererseits zusätzlich dazu eine Schnittstelle auf, an welcher die Antriebswelle mit ausserhalb der Stelleinrichtung angeordneten Hilfsmitteln antreibbar ist.

Durch diese Schnittstelle können weitere Antriebe an die Antriebswelle angekoppelt werden. Diese weiteren Antriebe können permanent mit der Antriebswelle verbunden sein oder auch nur zeitweise bzw. bedarfsweise mit der Antriebswelle verbunden sein. Die weiteren Antriebe können beispielsweise eine Handkurbel, ein fail safe Mechanismus oder ein Verstärkerantrieb sein, wobei der Verstärkerantrieb den Antrieb der Stelleinrichtung verstärkt.

Ein fail safe Mechanismus ist ein Mechanismus, welcher eine Ausfallsicherheit gewährleistet. Dies kann beispielsweise durch eine Ersatzkomponente realisiert werden, die bei einem Ausfall die Funktion der ausgefallenen Komponente Übernimmt. In diesem Fall also ein zweiter Antrieb, welcher bei einem Ausfall des Antriebs der Stelleinrichtung die Stelleinrichtung antreiben kann.

Als anderes Beispiel kann als fail safe Mechanismus eine parallel arbeitende Komponente eingesetzt werden, welche bei einem Ausfall der ersten Komponente die zusätzliche Belastung Übernimmt. Im vorliegenden Fall etwa ein zweiter Antrieb, welcher mit dem Antrieb der Stelleinrichtung zusammen die Antriebswelle antreibt, aber bei einem Ausfall des Antriebs der Stelleinrichtung auch alleine die Antriebswelle anzutreiben vermag.

Der fail safe Mechanismus kann insbesondere einen Energiespeicher umfassen, welcher ausreichend Energie gespeichert bereit hält, um den Stellantrieb mindestens für eine Stellbewegung anzutreiben. Der fail safe Mechanismus kann Energie in Form von mechanischer, elektrischer und/oder chemischer Energie speichern. Beispielsweise kann der fail safe Mechanismus Federn, Druckbehälter, Batterien, Kondensatoren und/oder Zündsätze als Energiespeicher aufweisen.

Als optionales Merkmal weist der Abtriebskörper in Richtung seiner rotationalen Bewegung eine maximale rotationale Bewegungsfreiheit von 400 Grad, insbesondere von maximal 200 Grad und insbesondere von maximal 100 Grad auf.

Zusätzlich oder alternativ dazu kann ein Verhältnis einer Übersetzung zwischen der rotationalen Bewegung der Antriebswelle und der rotationalen Bewegung des Abtriebkörpers im einem Bereich von 20:1 bis 800:1 liegen, insbesondere in einem Bereich von 40:1 bis 200:1 liegen und insbesondere in einem Bereich von 60:1 bis 120:1 liegen.

Als weiteres optionales Merkmal ist das zweite Getriebe in Form eines Schraubgetriebes ausgebildet, welches eine Gewindesteigung im Bereich 10 Grad bis 80 Grad, insbesondere von 30 Grad bis 60 Grad und insbesondere von 40 Grad bis 50 Grad aufweist.

Zusätzlich oder alternativ dazu kann ein maximales Drehmoment des Abtriebskörpers beim Ausüben einer Stellbewegung (also bei der rotationalen Bewegung des Abtriebskörpers relativ zum Referenzkörper) im einem Bereich von 0.1 bis 100 Nm liegen, insbesondere in einem Bereich von 0.1 bis 50 Nm liegen und insbesondere in einem Bereich von 0.1 bis 30 Nm liegen. Auch ein maximales Drehmoment im Bereich von 1 bis 10 Nm ist denkbar.

Ein weiterer Aspekt der Erfindung betrifft Verfahren zum Betreiben einer Stelleinrichtung.

Die Stelleinrichtung kann optional derart betrieben werden, dass am Ende einer Stellbewegung der Abtriebskörper eine kleine Bewegung entgegen der Richtung der Stellbewegung ausführt. Dies verhindert ein Verkanten, Verklemmen und/oder Festsitzen der Stelleinrichtung in einer Endposition und erleichtert eine weitere Stellbewegung.

Die Stelleinrichtung kann optional beispielsweise derart betrieben werden, dass der Abtriebskörper in Zeitintervallen zwischen Stellbewegungen kleine Bewegungen in einem einzahligen Prozentbereich der Stellbewegung (oder darunter) ausführt. Insbesondere können mehrere kleine Bewegungen in zueinander entgegen gesetzter Richtung zeitlich direkt aufeinander folgend durchgeführt werden, was einer Art Ruckelbewegung entspricht. Eine oder mehrere solcher kleinen Bewegungen und/oder Ruckelbewegungen können ein Festsitzen der Stelleinrichtung und/oder von damit verstellten Elementen verhindern oder wenigstens erschweren oder verlangsamen. Beispielsweise kann ein Festsitzen und/oder Verkrusten eines vom Stellantrieb verstellten Ventils verhindert oder wenigstens erschwert oder verlangsamt werden. Die oben beschriebene Stelleinrichtung ist aufgrund seiner besonderen Ausbildung robust bezüglich solcher kleinen Bewegungen und eignet sich daher für solche kleinen Bewegungen besser als beispielsweise Zahnradgetriebe. Ein weiterer Aspekt der Erfindung betrifft eine Vorrichtung umfassend einen fail safe Mechanismus und eine Stelleinrichtung, vorzugsweise eine Stelleinrichtung mit Schnittstelle wie bereits oben beschrieben, wobei der fail safe Mechanismus trennbar von der Stelleinrichtung ausgebildet ist und einen Energiespeicher umfasst, welcher ausreichend Energie gespeichert bereit hält, um die Stelleinrichtung mindestens für eine Stellbewegung anzutreiben.

Stelleinrichtungen und fail safe Mechanismen sind bereits weiter oben beschrieben.

Im Folgenden wird der Erfindungsgegenstand anhand eines bevorzugten Ausführungsbeispiels, welches in den beiliegenden Zeichnungen dargestellt ist, näher erläutert. Es zeigen:
- Figur 1: eine Explosionsdarstellung einer Stelleinrichtung in perspektivischer Ansicht von oben;
- Figur 2: die Explosionsdarstellung aus Figur 1 in perspektivischer Ansicht von unten;
- Figur 3: eine teilweise Explosionsdarstellung der Stelleinrichtung aus Figur 1 in perspektivischer Ansicht von oben, wobei der Abtriebskörper nicht in Explosionsdarstellung dargestellt ist;
- Figur 4: die Explosionsdarstellung aus Figur 3 in perspektivischer Ansicht von unten;
- Figur 5: ein Längsschnitt durch die Stelleinrichtung aus Figur 1;
- Figur 6: ein Querschnitt durch die Stelleinrichtung aus Figur 1;
- Figur 7: eine Ansicht von Bestandteilen der Stelleinrichtung aus Figur 1 in perspektivischer Darstellung;
- Figur 8: eine perspektivische Ansicht des Zwischenkörpers von unten;
- Figur 9: eine perspektivische Ansicht einer Antriebswelle von oben;
- Figur 10: eine perspektivische Ansicht des Stellantriebs aus Figur 1 von oben;
- Figur 11: die gleiche Ansicht wie in Figur 10, wobei der Stellantrieb an einem Ventil montiert ist.

Grundsätzlich sind in den Figuren gleiche Teile mit gleichen Bezugszeichen versehen.

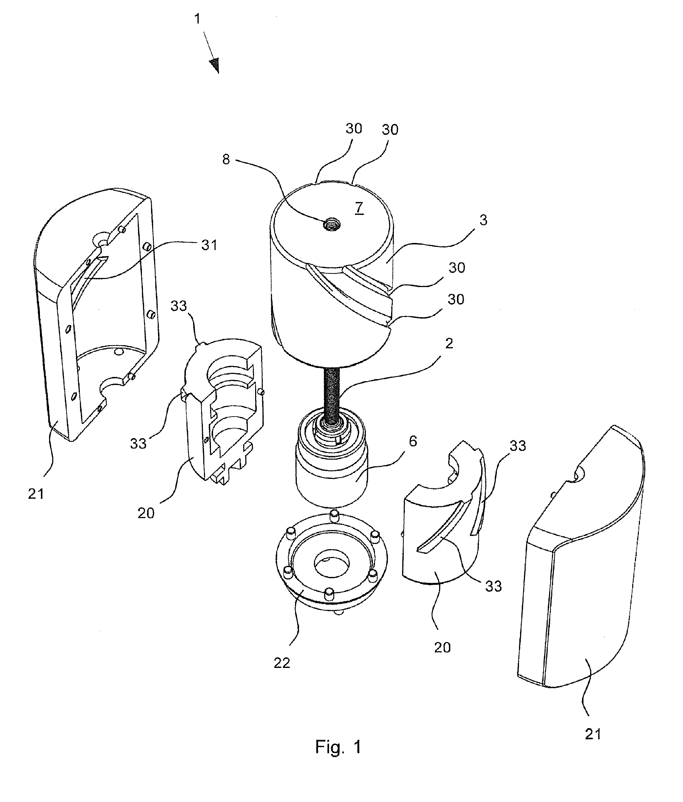

Figur 1 zeigt eine Explosionsdarstellung einer Stelleinrichtung 1 in perspektivischer Ansicht von oben. Die Stelleinrichtung 1 umfasst eine Antriebswelle 2, einen Zwischenkörper 3 und einen Referenzkörper 4, welcher aus zwei gleichen Gehäusehälften 21 sowie einer Grundplatte 22 zusammengesetzt ist. Zudem umfasst die Stelleinrichtung 1 einen Abtriebskörper 5, welcher aus zwei gleichen Abtriebskörperhälften 20 zusammengesetzt ist, und einen Antrieb 6. Der Antrieb 6 ist in diesem Fall ein elektrischer Schrittmotor.

Der Zwischenkörper 3, der Referenzkörper 4 und der Abtriebskörper 5 sind aus Kunststoff hergestellt. Die Abtriebskörperhälften 20 sind gleich ausgebildet, und die Gehäusehälften 21 sind ebenfalls gleich ausgebildet, was eine einfache und kostengünstige Herstellung erlaubt. Zudem ist Montage, Wartung und Reparatur der Stelleinrichtung 1 einfach, rasch und kostengünstig, weil der Abtriebskörper 5 und der Referenzkörper 4 um bereits montierte andere Komponenten herum zusammengesetzt bzw. auseinander genommen werden können.

Die genannten Kunststoffteile weisen funktionale Ausformungen auf, welche bei der Herstellung einfach, rasch und kostengünstig ausgebildet werden können. Beispielsweise weisen der Zwischenkörper 3, der Referenzkörper 4 und der Abtriebskörper 5 funktionale Teile von Getrieben auf (d.h. eine helikoidale Führung oder ein Gegenelement der helikoidalen Führung), nämlich funktionale Teile vom ersten und/oder vom zweiten Getriebe (ersten und/oder zweiten Typs). Die Stelleinrichtung 1 umfasst nur wenige Teile (bzw. Hälften von Teilen), welche zudem grösstenteils einfach und kostengünstig aus Kunststoff hergestellt werden können.

Bereits in Figur 1 sind einzelne funktionale Teile des zweiten Getriebes 12, welches ein Teilgetriebe ersten Typs 13 und ein Teilgetriebe zweiten Typs 14 umfasst, gut ersichtlich. Beispielsweise weist der Zwischenkörper 3, welcher als Hohlzylinder mit einem Deckel 7 ausgebildet ist, auf einer Aussenseite des Hohlzylinders vier helikoidale Führungen 30 des Teilgetriebes ersten Typs 13 auf. Die helikoidale Führungen 30 des Teilgetriebes ersten Typs 13 sind als Nuten mit trapezoidalem Querschnitt ausgeformt, wobei im Querschnitt ein Boden der Nuten kleiner ist als eine Öffnung der Nuten.

Die helikoidalen Führungen 30 des Teilgetriebes ersten Typs 13 weisen eine Steigung von 45 Grad auf. Die Gegenelemente 31 der helikoidalen Führung 30 des Teilgetriebes ersten Typs 13 sind auf einer Innenseite der Gehäusehälften 21 ausgeformt und weisen eine zur helikoidale Führungen 30 des Teilgetriebes ersten Typs 13 komplementäre Form auf. Die Gegenelemente 31 der helikoidalen Führung 30 des Teilgetriebes ersten Typs 13 weisen auch eine Steigung von 45 Grad auf. Sowohl die helikoidalen Führungen 30 des Teilgetriebes ersten Typs 13 als auch deren Gegenelemente 31 erstrecken sich so weit über die Aussenseite des Hohlzylinders des Zwischenkörpers 3 respektive über die Innenseite der Gehäusehälften 21 des Referenzkörpers 4, dass das Teilgetriebe ersten Typs 13 eine Schraubbewegung von einem Achtel einer Windung (45 Grad) auszuführen imstande ist

Auch vier Gegenelemente 33 einer helikoidalen Führung 32 des Teilgetriebes zweiten Typs 14, welche auf einer Aussenseite der Abtriebskörperhälften 20 ausgeformt sind, sind teilweise in Figur 1 ersichtlich. Die Gegenelemente 33 der helikoidalen Führungen 32 des Teilgetriebes zweiten Typs 14 weisen eine Steigung von 45 Grad auf. Sowohl die helikoidalen Führungen 32 des Teilgetriebes zweiten Typs 14 als auch deren Gegenelemente 33 erstrecken sich so weit über die Innenseite des Hohlzylinders des Zwischenkörpers 3 respektive über die Aussenseite der Abtriebskörperhälften 20, dass das Teilgetriebe ersten Typs 13 eine Schraubbewegung von einem Achtel einer Windung (45 Grad) auszuführen imstande ist

Sowohl das Teilgetriebe ersten Typs 13 als auch das Teilgetriebe zweiten Typs 14 sind also als Schraubgetriebe ausgebildet. Das erste Getriebe 11 ist ebenfalls aus Schraubgetriebe ausgebildet. Die Antriebswelle 2 weist auf einem Teil ihrer Aussenseite ein Gewinde auf, welches in Zusammenwirkung mit einem vom Deckel 7 des Zwischenkörpers 3 umfassten Gegengewindes 8 das erste Getriebe 11 ausbildet. Durch eine rotationale Bewegung der Spindel 2 wird somit der Zwischenkörper 3 aufgrund seiner Kopplung durch das erste Getriebe 11 an die Spindel 2 mit einer linearen Bewegungskomponente entlang einer Mittelachse der Spindel 2 bewegt.

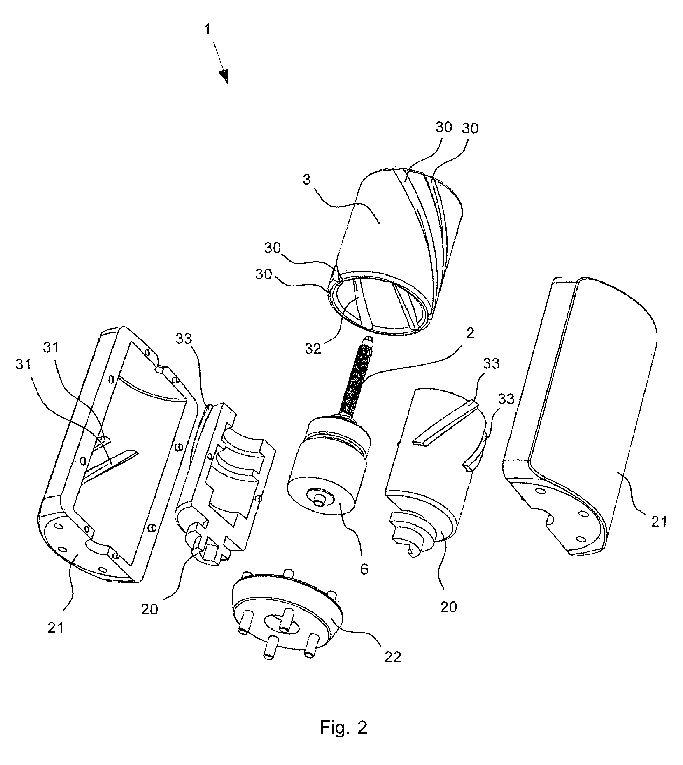

Figur 2 zeigt die Explosionsdarstellung aus Figur 1 in perspektivischer Ansicht von unten. Zusätzlich sind hier auch helikoidale Führung 32 des Teilgetriebes zweiten Typs 14 erkennbar, welche auf einer Innenseite des Hohlzylinders des Zwischenkörpers 3 ausgebildet sind.

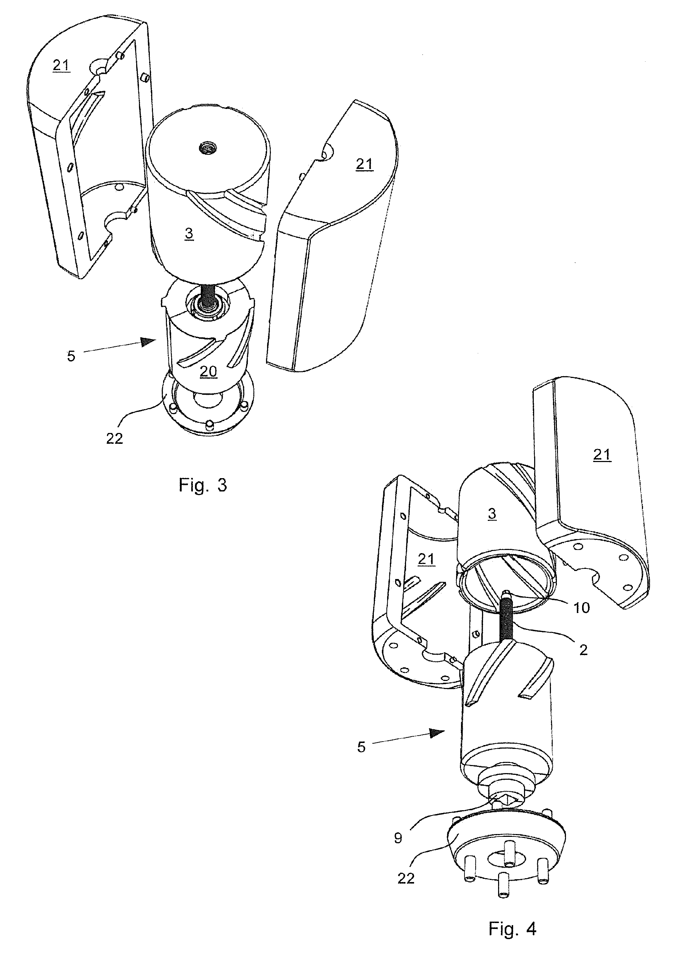

In Figur 3 ist eine teilweise Explosionsdarstellung der Stelleinrichtung 1 aus Figur 1 in perspektivischer Ansicht von oben gezeigt. Dabei ist der Abtriebskörper 5 nicht in Explosionsdarstellung dargestellt. Figur 4 zeigt dasselbe in perspektivischer Ansicht von unten. In Figuren 3 und 4 ist gut ersichtlich, wie die beiden Abtriebskörperhälften 20 den Antrieb 6 in zusammengebauten Zustand umfassen und befestigen. Die dazu geeigneten Ausformungen sind an einer Innenseite der Abtriebskörperhälften 20 ausgebildet und beispielsweise in Figuren 1 und 2 gut erkennbar.

Am Antrieb 6, genauer gesagt an einem Rotor des Antriebs 6 ist die Antriebswelle 2 befestigt, welche aus dem Abtriebskörper 5 herausragt. In die entgegen gesetzte Richtung ragt eine Abtriebskupplung 9 mit einer Vierkantöffnung aus dem Abtriebskörper 5 heraus, wodurch der Abtriebskörper 5 mit einem zu stellenden Element verbunden werden kann, beispielsweise einem Ventil. Die Abtriebskupplung 9 und die Antriebswelle 2 sind koaxial angeordnet und selbstzentrierend am Referenzkörper 4 befestigt. Die Abtriebskupplung 9 erstreckt sich in montiertem Zustand der Stelleinrichtung 1 durch eine mittige Öffnung der runden Grundplatte 22. Die Antriebswelle 2 erstreckt sich an einem der mittigen Öffnung der Grundplatte 22 gegenüber liegenden Ende des Referenzkörpers 4 durch eine Öffnung des Referenzkörpers 4 und ist dort drehbar gelagert, beispielsweise durch ein Kugellager. An diesem Ende der Antriebswelle 2 ist auch eine Schnittstelle 10 in Form eines hexagonalen Endes der Antriebswelle 2 ausgebildet, an welche von ausserhalb der Stelleinrichtung 1 auf die Antriebswelle 2 zugegriffen und diese angetrieben werden kann.

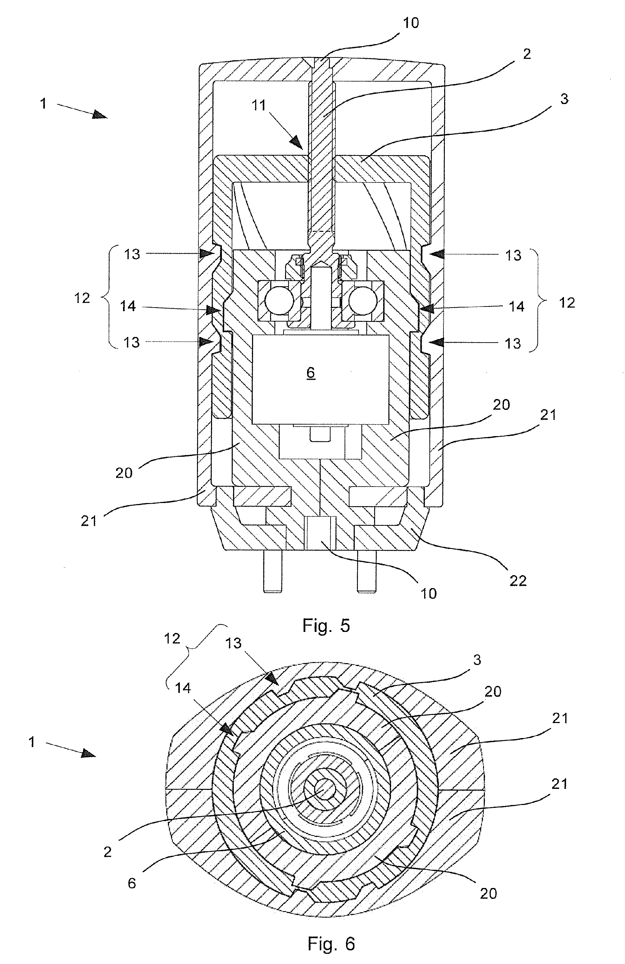

Figur 5 zeigt einen Längsschnitt durch die Stelleinrichtung 1 aus Figur 1 und Figur 6 zeigt einen Querschnitt durch die Stelleinrichtung 1 aus Figur 1. Die Stelleinrichtung 1 ist dabei in montiertem und betriebsbereitem Zustand dargestellt. Das erste Getriebe 11 und das zweite Getriebe 12 mit seinen beiden Teilgetrieben, nämlich dem Teilgetriebe ersten Typs 13 und dem Teilgetriebe zweiten Typs 14, sind auf den Figuren 5 und 6 gut erkennbar.

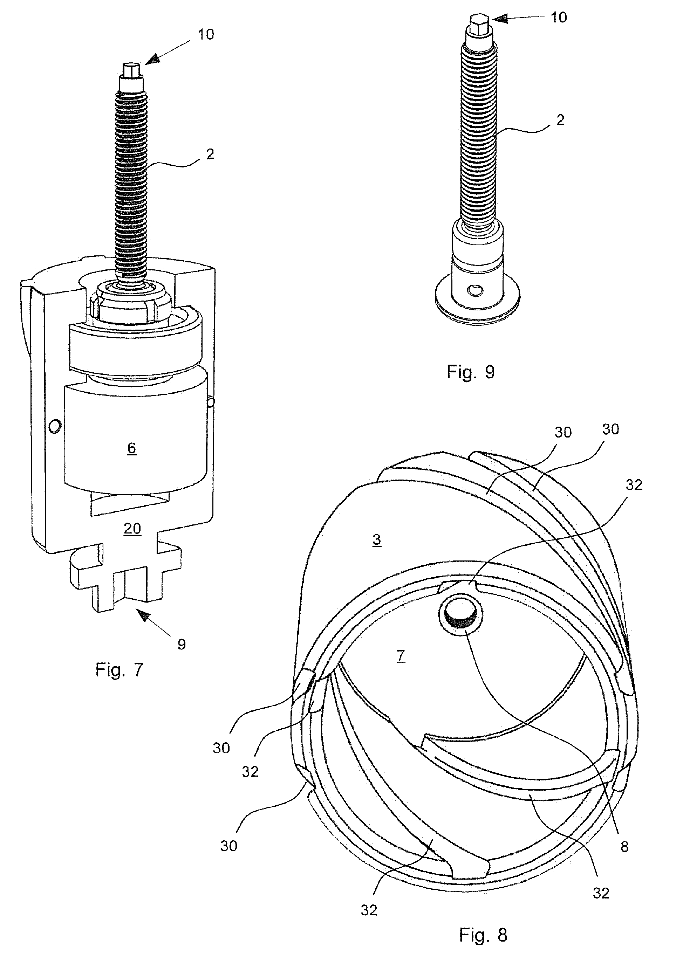

Figur 7 zeigt eine Ansicht von Bestandteilen der Stelleinrichtung 1 aus Figur 1 in perspektivischer Darstellung, nämlich eine Ansicht eines Antriebs 6, welcher in einer Abtriebskörperhälfte 20 in zusammengebauter Position eingebettet ist. Am Antrieb 6 ist dabei die Antriebswelle 2 befestigt.

Figur 8 zeigt eine perspektivische Ansicht des Zwischenkörpers von unten, wobei die helikoidalen Führungen 30 des Teilgetriebes ersten Typs 13 und die die helikoidalen Führungen 32 des Teilgetriebes zweiten Typs 14 gut ersichtlich sind.

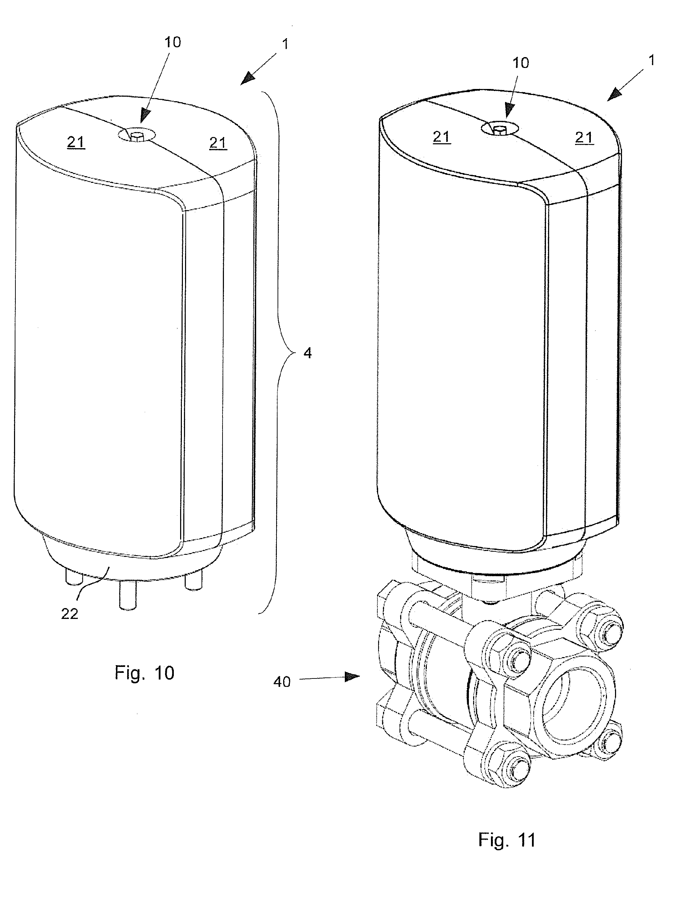

Figur 9 zeigt eine perspektivische Ansicht der Antriebswelle 2 von oben. Figur 10 wiederum zeigt eine perspektivische Ansicht des betriebsbereit montieren und zusammengesetzten Stellantriebs 1 aus Figur 1 von oben. Und Figur 11 zeigt die gleiche Ansicht wie in Figur 10, wobei der Stellantrieb 1 an einem Ventil 40 montiert ist.

Der Stellantrieb 1 wird derart betrieben, dass er bei Bedarf von einer ersten Stellposition in eine zweite Stellposition bewegt wird und zurück. Im Vorliegenden Fall unterscheidet sich die erste Stellposition von der zweiten Stellposition dadurch, dass die Abtriebskupplung 9 und damit auch der Abtriebskörper 5 um eine Vierteldrehung, d.h. um 90 Grad rotational zum Referenzkörper 4 geschwenkt bzw. verdreht ist. In der ersten Stellposition befindet sich also ein Referenzpunkt der Abtriebskupplung 9 an einer Position mit 0 Grad rotationaler Auslenkung relativ zum Referenzkörper 4. In der zweiten Stellposition hingegen befindet sich der Referenzpunkt der Abtriebskupplung 9 an einer Position mit 90 Grad rotationaler Auslenkung relativ zum Referenzkörper 4.

Da der Antrieb 6 am Abtriebskörper 5 befestigt ist, ist der Antrieb 6 in der zweiten Stellposition ebenfalls um eine Vierteldrehung, d.h. um 90 Grad rotational zum Referenzkörper 4 geschwenkt bzw. verdreht. Genauer gesagt ist der Stator des Antriebs 6 am Abtriebskörper 5 befestigt, und somit ist der Stator des Antriebs 6 um eine Vierteldrehung, d.h. um 90 Grad rotational zum Referenzkörper 4 geschwenkt.

Das zweite Getriebe 12 umfasst zwei Teilgetriebe, welche in der zweiten Stellposition je einer Achteldrehung d.h. um 45 Grad rotational verdreht sind. Einerseits relativ zum Referenzkörper 4 (Teilgetriebe ersten Typs 13) und andererseits relativ zum Abtriebskörper 5 (Teilgetriebe zweiten Typs 14). Beide Achteldrehungen erfolgen in dieselbe Drehrichtung, wodurch sich die beiden Achteldrehungen zu der Vierteldrehung addieren, welche die Abtriebskupplung 9, der Abtriebskörper 5 und der Stator des Antriebs 6 in der zweiten Stellposition aufweisen. Somit ist der Zwischenkörper 3 nur halb so weit verdreht bzw. geschwenkt wie der Abtriebskörper 5 und der Stator des Antriebs 6.

Bei einer Stellbewegung der Stelleinrichtung 1 treibt also der Antrieb 6 die Antriebswelle 2 an, welche dadurch relativ zum Referenzkörper 4 rotiert. Die Antriebswelle 2 ist drehbar aber translationsfest am Referenzkörper 4 befestigt.

Durch das erste Getriebe 11 wird die rotationale Bewegung der Antriebswelle 2 einerseits in eine lineare Bewegungskomponente (des Zwischenkörpers 3 relativ zum Referenzkörper 4) und andererseits in eine rotationale Bewegungskomponente (des Zwischenkörpers 3 relativ zum Referenzkörper 4) umgesetzt. Der Zwischenkörper 3 vollzieht also relativ zum Referenzkörper 4 eine kombinierte Dreh-Hubbewegung. Dabei setzt das zweite Getriebe 12 über das Teilgetriebe ersten Typs 13 und das Teilgetriebe zweiten Typs 14 die kombinierte Dreh-Hubbewegung des Referenzkörpers in eine rotationale Bewegung des Abtriebkörpers 5 um. Dadurch wird die lineare Bewegungskomponente des Zwischenkörpers 3 in die rotationale Bewegung des Abtriebkörpers 5 umgesetzt. Auch der Abtriebskörper 5 ist drehbar aber translationsfest am Referenzkörper 4 befestigt. Die Verschiebungsgerade, entlang welcher der Zwischenkörper 3 durch die lineare Bewegungskomponente bewegt wird, verläuft parallel zur Mittelachse der Antriebswelle 2.

Die in den Figuren dargestellte Stelleinrichtung 1 weist eine Übersetzung zwischen der Antriebswelle 1 und dem Abtriebskörper 5 mit einem Übersetzungsverhältnis von 80:1 auf.

Insbesondere kann die Antriebswelle 2 ein Gewinde in Form eines zweigängigen Doppelgewindes aufweisen, und das Gegengewinde ist aus zwei gleichen Teilen zusammengesetzt.

Eine typische Dauer für eine Stellbewegung der beschriebenen Stelleinrichtung 1 kann im Bereich von 2-3 Sekunden liegen. Allerdings sind auch schnellere Stellbewegungen möglich. Auch langsamere Stellbewegungen sind möglich, insbesondere bis zu 10 Sekunden und insbesondere bis zu 30 Sekunden lang dauernde Stellbewegungen. Eine Stellbewegung entspricht dabei einer Bewegung von der ersten (End-)Position der Stelleinrichtung 1 in die zweite (End-)Position der Stelleinrichtung 1.

An die in Figuren 10 und 11 gut erkennbare Schnittstelle 10 kann ein fail safe Mechanismus angeschlossen und befestigt werden. Insbesondere kann der fail safe Mechanismus modular ausgebildet und trennbar von der Stelleinrichtung 1 konstruiert sein.

## Patentansprüche

1. Stelleinrichtung (1) zur Erzeugung einer rotationalen Stellbewegung aus einer rotationalen Antriebsbewegung, insbesondere zum rotationalen Verstellen eines Ventils (40), umfassend eine Antriebswelle (2), einen Zwischenkörper (3), einen Referenzkörper (4), und einen Abtriebskörper (5), wobei die vorgenannten Elemente der Stelleinrichtung (1) relativ zueinander bewegbar ausgebildet sind, sowie umfassend ein erstes Getriebe (11) und ein zweites vom ersten verschiedenes Getriebe (12), wobei
- das erste Getriebe (11) derart ausgebildet ist, dass es eine rotationale Bewegung der Antriebswelle (2) relativ zum Referenzkörper (4) in eine lineare Bewegungskomponente des Zwischenkörpers (3) relativ zum Referenzkörper (4) umsetzt,
- die Stelleinrichtung (1) eine Verschiebungsgerade aufweist, entlang welcher sich der Zwischenkörper (3) durch die lineare Bewegungskomponente des Zwischenkörper (3) relativ zum Referenzkörpers (4) bewegt und
- das zweite Getriebe (12) derart ausgebildet ist, dass es die lineare Bewegungskomponente des Zwischenkörpers (3) relativ zum Referenzkörper (4) in eine rotationale Bewegung des Abtriebkörpers relativ zum Referenzkörper (4) umsetzt.

2. Stelleinrichtung (1) gemäss Anspruch 1, wobei das zweite Getriebe (12) ein Getriebe eines ersten Typs (13) umfasst, wobei das Getriebe ersten Typs (13) die lineare Bewegungskomponente des Zwischenkörpers (3) relativ zum Referenzkörper (4) in eine rotationale Bewegung des Zwischenkörpers (3) relativ zum Referenzkörper (4) umsetzt.

3. Stelleinrichtung (1) gemäss Anspruch 1 oder 2, wobei das zweite Getriebe (12) ein Getriebe zweiten Typs (14) umfasst, wobei das Getriebe zweiten Typs (14) eine lineare Bewegungskomponente des Zwischenkörpers (3) relativ zum Abtriebskörper (5) in eine rotationale Bewegung des Zwischenkörpers (3) relativ zum Abtriebskörper (5) umsetzt.

4. Stelleinrichtung (1) gemäss einem der Ansprüche 1 bis 3, wobei eine Antriebsachse parallel zu einer Abtriebsachse angeordnet ist und insbesondere dass die Antriebsachse koaxial zur Abtriebsachse angeordnet ist, wobei die Antriebswelle (2) bei der rotationalen Bewegung um die Antriebsachse rotiert und der Abtriebskörper (5) bei der rotationalen Bewegung um die Abtriebsachse rotiert.

5. Stelleinrichtung (1) gemäss einem der Ansprüche 1 bis 4, wobei die Verschiebungsgerade parallel zu einer Abtriebsachse angeordnet ist, und wobei der Abtriebskörper (5) bei der rotationalen Bewegung um die Abtriebsachse rotiert.

6. Stelleinrichtung (1) gemäss einem der Ansprüche 1 bis 5, wobei das erste Getriebe (11) und/oder das zweite Getriebe (12) ein Schraubgetriebe umfasst, welches zum Umsetzen der rotationalen Bewegungen bzw. der linearen Bewegungskomponente angeordnet ist.

7. Stelleinrichtung (1) gemäss einem der Ansprüche 1 bis 6, wobei die Antriebswelle (2) translationsfest aber drehbar am Referenzkörper (4) gelagert ist und insbesondere auch der Abtriebskörper (5) translationsfest aber drehbar am Referenzkörper (4) gelagert ist.

8. Stelleinrichtung (1) gemäss einem der Ansprüche 1 bis 7, wobei die Stelleinrichtung (1) einen elektrischen Antrieb umfasst, welches zum Antreiben der Antriebswelle (2) angeordnet ist.

9. Stelleinrichtung (1) gemäss einem der Ansprüche 1 bis 8, wobei ein Antrieb (6) der Antriebswelle (2) rotationsfest und translationsfest am Abtriebskörper (5) befestigt ist.

10. Stelleinrichtung (1) gemäss einem der Ansprüche 1 bis 9, wobei in einer ersten Stellung der Stelleinrichtung (1) ein Antrieb der Antriebswelle (2) im Wesentlichen vom Zwischenkörper (3) räumlich umgeben ist und sich in einer zweiten, von der ersten verschiedenen, Stellung der Stelleinrichtung (1) der Antrieb der Antriebswelle (2) im Wesentlichen ausserhalb des Zwischenkörpers (3) befindet.

11. Stelleinrichtung (1) gemäss einem der Ansprüche 1 bis 10, wobei der Zwischenkörper (3) mindestens bereichsweise als Hohlzylinder ausgebildet ist, welcher koaxial zu einer Abtriebsachse angeordnet ist, wobei der Abtriebskörper (5) bei der rotationalen Bewegung um die Abtriebsachse rotiert.

12. Stelleinrichtung (1) gemäss einem der Ansprüche 6 bis 11, wobei das erste Getriebe (11) und/oder zweite Getriebe (12) ein Schraubgetriebe in Form eines Gleitlagers umfasst, bei welchem sowohl eine helikoidalen Führung als auch ein Gegenelement der helikoidalen Führung aus Kunststoff ausgebildet sind und diese durch Gleitreibung aneinander relativ zueinander bewegbar sind.

13. Stelleinrichtung (1) gemäss einem der Ansprüche 1 bis 12, wobei die Antriebswelle (2) einen Antrieb (6) aufweist und die Antriebswelle (2) zusätzlich eine Schnittstelle (10) aufweist, an welcher die Antriebswelle (2) mit ausserhalb der Stelleinrichtung (1) angeordneten Hilfsmitteln antreibbar ist.

14. Stelleinrichtung (1) gemäss einem der Ansprüche 1 bis 13, wobei der Abtriebskörper (5) in Richtung seiner rotationale Bewegung eine maximale rotationale Bewegungsfreiheit von 400 Grad, insbesondere von maximal 200 Grad und insbesondere von maximal 100 Grad aufweist.

15. Stelleinrichtung (1) gemäss einem der Ansprüche 1 bis 14, wobei ein Verhältnis einer Übersetzung zwischen der rotationalen Bewegung der Antriebswelle (2) und der rotationalen Bewegung des Abtriebkörpers (5) im einem Bereich von 20:1 bis 800:1 liegt, insbesondere in einem Bereich von 40:1 bis 200:1 liegt und insbesondere in einem Bereich von 60:1 bis 120:1 liegt.

16. Vorrichtung umfassend einen fail safe Mechanismus und eine Stelleinrichtung (1), vorzugsweise eine Stelleinrichtung (1) gemäss Anspruch 13, wobei der fail safe Mechanismus trennbar von der Stelleinrichtung (1) ausgebildet ist und einen Energiespeicher umfasst, welcher ausreichend Energie gespeichert bereit hält, um die Stelleinrichtung (1) mindestens für eine Stellbewegung anzutreiben.
